# EUROPEAN PATENT APPLICATION

(11) **EP 2 878 737 A1**
(43) Date of publication of application: **03.06.2015**
(21) Application number: 13819500.3
(22) Date of filing: 28.06.2013
(51) Int. Cl.: E03C 1/02, F16L 39/00, F24D 17/00

(54) **EMBEDDABLE ASSEMBLY FOR A HYDRAULIC CONNECTION**

(30) Priority: 17.07.2012 ES 201231117
(71) Applicant: Bnstar Innovations S. L., 08773 Sant Cugat del Vallès (ES)
(72) Inventor: PINTIADO PIBERNAT, Juan Luis, E-08034 Barcelona (ES)
(74) Representative: Oficina Ponti, SLP
(86) International application number: PCT/ES2013/070439
(87) International publication number: WO 2014/013112

(57) **Abstract**

Embeddable hydraulic connector assembly 1, comprising a parallelepiped-shaped box 2 able to be embedded into a wall, the box 2 comprising hydraulic connections 3 that traverse it. These hydraulic connections 3 comprise an outer part 32 for connection to the ends of some T pipes embedded in the wall and an inner part 33 for connection to a distribution assembly 4 comprising at least one solenoid valve 41, characterised by the fact that said hydraulic connections 3 traverse the box 2 on only one side 21, with the connection of said inner part 33 being a pressure connection and by the fact that said distribution assembly 4 can be slid within the box in one connection direction D with said inner connection part 33.

## Description

The present invention relates to an embeddable hydraulic connection assembly whose modularity makes it highly versatile.

### Background of the Invention

Embeddable hydraulic connection assemblies are familiar, comprising a parallelepiped-shaped box able to be embedded in a wall, in which the box is traversed by hydraulic connections and is made up of an outer part intended to be connected to the ends of a series of embedded wall pipes and an internal part for connection to a distribution assembly comprising at least one solenoid valve.

In general, this installation procedure consists of the installer installing the box, implementing the connections of the inlet and outlet pipes with the box and implementing a distribution assembly inside the box as needed. Then the lid of the box is closed, preferably so that it remains accessible.

The inventors have, however, found that the existing solutions have the following drawbacks:
- Lack of versatility;
- The final quality of the installation is left to chance as part of the work as a whole;
- It is necessary to use different ranges of products when aiming at implementing different applications;
- The replacement of components is difficult and it is always necessary to deal with a specialist;
- In most cases, labour is required for the substitution of the embedded body;

### Description of the Invention

To overcome the drawbacks mentioned, the present invention proposes an embedded hydraulic connector assembly, comprising a parallelepiped-shaped box able to be embedded in a wall, the box comprising hydraulic connections that traverse it, said hydraulic connections comprising an outer part for connection to the ends of pipes embedded in the wall and an inner part for connection to a distribution assembly comprising at least one solenoid valve, characterised by the fact that said hydraulic connections traverse the box on only one side, with the connection of said inner part being a pressure connection and by the fact that said distribution assembly can be slid within the box in one connection direction with said inner connection part.

According to various optional features of the invention, the combination of which, whenever technically possible, can lead to several variants of the invention:
- the distribution assembly is arranged in a guided casing inside the box.
- the distribution assembly comprises one or two outlets and two inlets, a mixing volume, a temperature sensor in the outlet, with the solenoid valve being arranged between the mixing volume and the temperature sensor.
- the distribution assembly comprises a flow meter.
- the distribution assembly comprises a control unit for the solenoid valve.
- the distribution assembly comprises a remote control unit.
- the hydraulic connections that traverse the box comprise a non-return valve.
- the distribution assembly comprises a U-shaped connection and the solenoid valve.
- this solenoid valve may be a proportional type.
- the assembly comprises a removable lid which partially covers the box, enabling the removal and/or insertion of the distribution assembly.
- the removable lid is a manually controlled element or a display screen.
- the assembly comprises an electric power connection.

Lastly, an embodiment containing four hydraulic connections is preferred.

The invention also refers to a water distribution facility, which comprises an assembly according to the invention, as per any of the variants described.

More preferably, in the installation the box is partly covered by tiles and the remaining part by a removable lid which allows the removal and/or insertion of the distribution assembly.

### Brief Description of the Figures

For a better understanding of what has been outlined, some drawings have been added in which, schematically and solely as a non-limiting example, a number of practical cases of the embodiment are represented.
Figures 1 to 4 illustrate the embeddable assembly of the invention in several different positions of insertion.
Figure 5 illustrates the different components of the distribution assembly.
Figures 6 and 7 illustrate two variants of the embeddable assembly arranged within a wall.
Figures 8 and 9 illustrate two variants of the distribution assembly.
Figure 10 shows a distribution assembly which is traversed by four hydraulic connections.

### Description of Preferred Embodiments

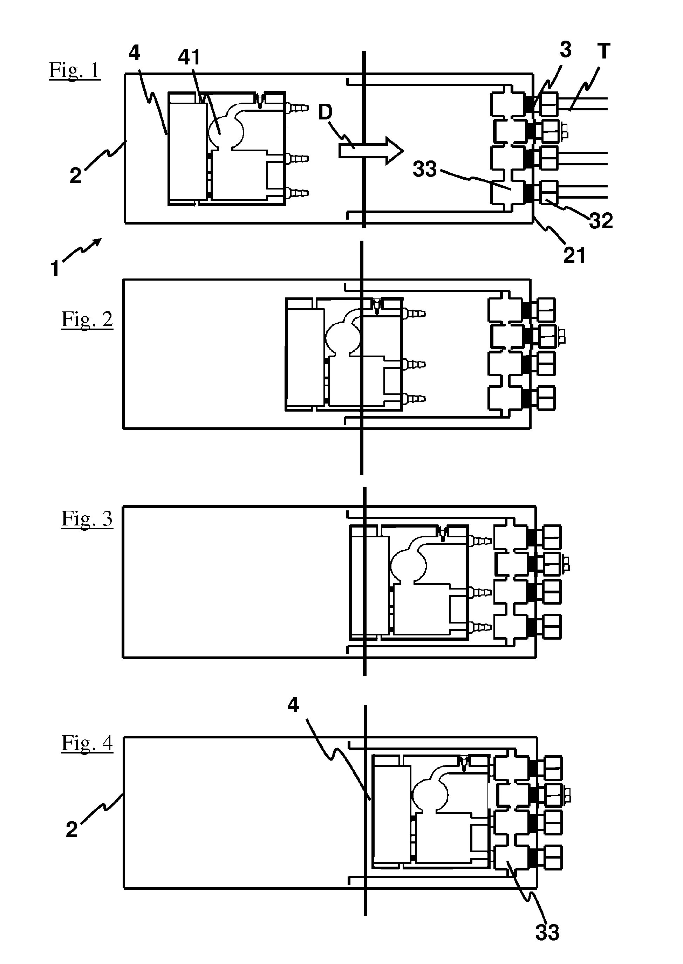

As described in Figure 1, the invention relates to an embeddable hydraulic connection assembly 1, comprising a parallelepiped-shaped box 2 able to be embedded in a wall, the box 2 comprising some hydraulic connections 3 which traverse it. Said hydraulic connections 3 comprise an outer part 32 for connection to the ends of some T pipes embedded in the wall and an inner part 33 for connection to a distribution assembly 4 comprising at least one solenoid valve 41.

The invention is characterised by the fact that these three hydraulic connections traverse the box 2 on only one side 21, with the connection of said inner part 33 being a pressure connection and by the fact that said distribution assembly 4 can slide in one connection direction D within the box with said inner connecting part 33.

Therefore, once the box is embedded and connected via the outer part, it is possible to make and/or modify and/or substitute the distribution assembly in a convenient and versatile manner.

The assembly preferably comprises four hydraulic connections, for example as illustrated in Figures 1 to 3. The number of these eventually employed will depend on the needs.

As shown in Figure 1, according to a particularly preferred embodiment the distribution assembly is arranged in a guided casing 41 in the box 2.

In another embodiment, the distribution assembly 4 comprises an outlet 42 and two inlets 43, 44, a mixing volume 45, a temperature sensor 46 on the outlet 42, with the solenoid valve 41 being arranged between the mixing volume 45 and the temperature sensor 46.

In another embodiment, the distribution assembly 4 comprises a control unit 47 for the solenoid valve 41.

The distribution assembly 4 can also be arranged to comprise a remote communication unit, so that a centralised or distributed control system can be integrated into it. The remote communication may be either by radio frequency or cable.

To make the change of distribution assembly without water leakage, it is anticipated that the hydraulic connections 3 which traverse the box 2 should comprise a non-return valve, which allows pressurising of the elements installed and checking that the connections are correct when not yet installed in the distribution assembly.

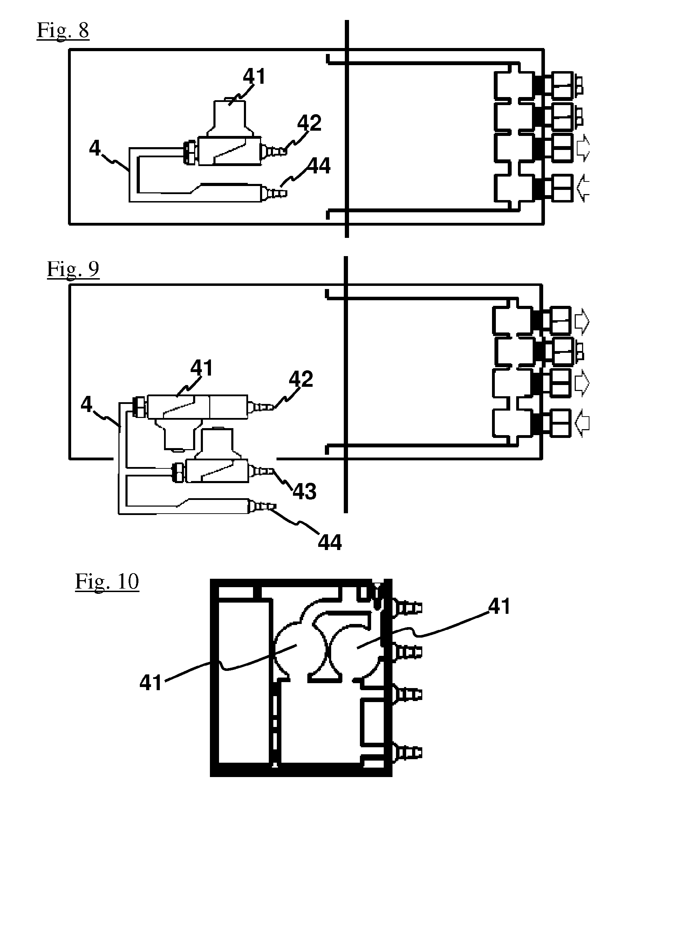

In another variant of the embodiment, the distribution assembly 4 comprises a U-shaped connection and the solenoid valve 41, as illustrated in Figure 8.

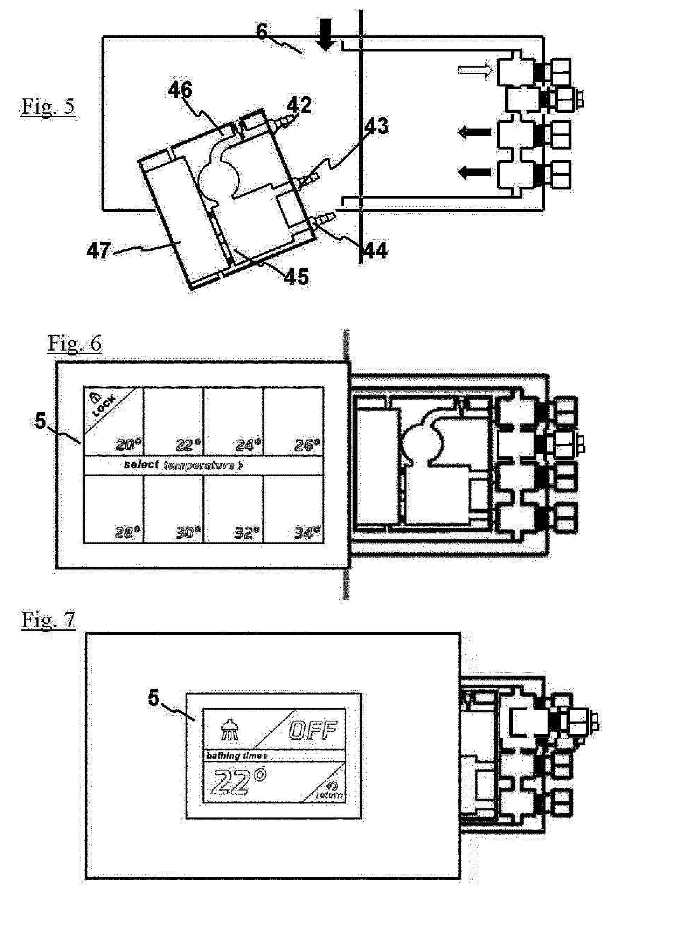

As illustrated in Figures 6 and 7, the embeddable assembly comprises a removable lid 5 which partially covers the box, enabling removal and/or insertion of the distribution assembly 4. This removable lid 5 is a manually controlled element or a display screen.

As shown in Figure 6, an electric power connection 6 is planned to feed the different components of the distribution assembly and/or the lid.

In a particularly preferred variant, the assembly comprises four hydraulic connections 3.

Although reference has been made to a specific embodiment of the invention, it should be apparent to an expert in this field that the embeddable assembly and the installation described are capable of numerous variations and modifications, and that all the details mentioned can be replaced with others which are technically equivalent, without departing from the scope of protection defined by the attached claims.

## Claims

1. Embeddable hydraulic connector assembly (1), comprising a parallelepiped-shaped box (2) able to be embedded into a wall, the box (2) comprising hydraulic connections (3) that traverse it, said hydraulic connections (3) comprising an outer part (32) for connection to the ends of some pipes (T) embedded in the wall and an inner part (33) for connection to a distribution assembly (4) comprising at least one solenoid valve (41), **characterised by** the fact that said hydraulic connections (3) traverse the box (2) on only one side (21), with the connection of said inner part (33) being a pressure connection and by the fact that said distribution assembly (4) can be slid within the box in one connection direction (D) with said inner connection part (33).

2. Assembly according to the preceding claim, wherein said distribution assembly is arranged in a guided casing (41) within the box (2).

3. Assembly according to any of the preceding claims, wherein said distribution assembly (4) comprises an outlet (42) and two inlets (43, 44), a mixing volume (45), a temperature sensor (46) in the outlet (42), with the solenoid valve (41) being arranged between the mixing volume (45) and the temperature sensor (46).

4. Assembly according to any of the preceding claims, wherein the distribution assembly (4) comprises a control unit (47) for the solenoid valve (41).

5. Assembly according to any of the preceding claims, wherein the distribution assembly (4) comprises a remote communication unit.

6. Assembly according to any of the preceding claims, wherein the hydraulic connections (3) traversing the box (2) comprise a non-return valve.

7. Assembly according to claim 1, wherein the distribution assembly (4) comprises a U-shaped connection and the solenoid valve (41).

8. Assembly according to any of the preceding claims, comprising a removable lid (5) which partially covers the box, which allows the removal and/or insertion of the distribution assembly (4).

9. Assembly according to the preceding claim, wherein the removable lid (5) is a manually controlled element or a display and control screen.

10. Assembly according to any of the preceding claims, comprising an electric power connection (6).

11. Assembly according to any of the preceding claims, comprising four hydraulic connections (3).

12. Assembly according to any of the preceding claims, wherein the distribution assembly comprises a flow meter.

13. Water distribution installation comprising an assembly according to any of the preceding claims.

14. Installation according to the preceding claim, in which the box is partly covered by tiles and the remaining part by a removable lid which allows the removal and/or insertion of the distribution assembly (4).
